# EUROPEAN PATENT SPECIFICATION

(11) **EP 2 468 579 B1**
(45) Date of publication and mention of the grant of the patent: **20.11.2013**
(21) Application number: 11195671.0
(22) Date of filing: 23.12.2011
(51) Int. Cl.: B60R 11/04, B60S 1/56, B60R 1/06

(54) **Housing for exterior imaging device of vehicle**
Gehäuse für Außenabbildungsvorrichtung eines Fahrzeugs
Boîtier pour dispositif d'imagerie extérieur de véhicule

(30) Priority: 27.12.2010 KR 20100135184
(43) Date of publication of application: 27.06.2012
(73) Proprietor: Wee, Jay Young, Woodbury, NY 17797 (US)
(72) Inventor: Wee, Jay Young, Woodbury, NY 17797 (US)
(74) Representative: Pierce, Christopher James

(56) References cited:
- EP-A1- 2 431 231
- DE-A1-102004 050 887
- DE-A1-102010 022 163
- DE-U1-202006 017 665
- JP-A- 4 138 943
- JP-A- 2002 240 628
- US-A- 4 898 458
- US-A- 5 385 612
- US-A1- 2009 250 533

## Description

### FIELD

This disclosure relates to a housing for an imaging device of a vehicle, and more particularly to such a housing which includes an internal path which uses an air flow induced by the velocity of the vehicle to clean the lens of the imaging device.

### BACKGROUND

Imaging device are becoming more and more popular and are used to assist in informing the driver of a state of the road at the front of the vehicle. However, such imaging device are typically mounted inside a vehicle, and it thus remains difficult in this context to provide a blind spot view or rear view.

US5385612 discusses a cleaning system for removing undesirable material from an outer surface of an optical element moving a fluid. The cleaning system comprises a tubular duct for the flow of the fluid medium and has an entrance end and an exit end. The tubular duct narrows down in cross-sectional area to define a venturi section at the exit end.

DE202006017665 discusses a device to process optically transmitted data from the interior and exterior of a vehicle. The device comprises a housing, a pivotable and turnable camera mounted on the housing whose data is automatically processed, displayed and signalled. The housing is built into the roof and/or boot area of the vehicle body to be lowered down and pulled out.

### SUMMARY

An imaging device is installed to an exterior of a vehicle, such as on a roof of the vehicle, to give a blind spot view or a rear view. In a case where the imaging device is installed to an exterior of a vehicle, impurities such as dust, pollen, sand, rain and snow may damage a lens of the imaging device or adhere to the lens of the imaging device so that the image may become murky or gray. If a protection window is used in front of the lens, the impurities will likely adhere to the protection window, and the image quality still be deteriorated.

However, impurities such as dust can be prevented from adhering to a lens of the imaging device by using an air flow which is naturally supplied while the vehicle is driving, and which may remove impurities adhered to the lens so that the imaging device may give a clear image quality.

Henceforth, a housing for an exterior imaging device may be installed to an exterior of a vehicle to remove a blind spot and/or give a rear view by adopting a structure capable of preventing impurities such as dust from adhering to a lens of the imaging device.

In one general aspect, there is provided a housing for an exterior imaging device of a vehicle, in accordance with claim 1. In further general aspect there is provided a vehicle comprising such a housing for an exterior imaging device, in accordance with claim 6.

In addition, the extension hood may be formed at right and left sides of the housing body and a side of the housing body opposite to the air inhaling hole.

In another aspect, a mesh filter or grating may be installed in the air inhaling hole.

According to the invention, a sectional area of the air supply path is smaller than a sectional area of the air inhaling hole.

According to the invention, an air accelerating fan is installed to a part of the air supply path.

In another aspect, the a housing receiving groove in which the housing body is tightly received may be formed in the vehicle, so that the housing body is received in the housing receiving groove, and the housing body may protrude from the housing receiving groove when the imaging device is operating.

In another aspect, a waterproof rubber gasket may be installed at an edge of the housing receiving groove.

In another aspect, the housing body may be operated by a motor to protrude from the housing receiving groove.

Other objects and advantages of this disclosure will be more apparent from the following description of preferred embodiments with reference to the accompanied drawings.

### DESCRIPTION OF THE DRAWINGS

Fig. 1 is a side view showing a housing for an exterior imaging device of a vehicle according to an embodiment;
Fig. 2 is a schematic view showing a relation among sectional areas of an air inhaling hole, an air supply path and an air injection hole;
Fig. 3 is a perspective view showing an example of a fan installed to a part of the air supply path;
Figs. 4a and 4b are rear and front elevation views showing a housing for an exterior imaging device of a vehicle according to another embodiment, with Fig. 4c being a cross-sectional view thereof showing an air passage;
Fig. 5 is a schematic view illustrating operations of a housing; and
Figs. 6a and 6b are schematic views showing an installation state of the housing for an exterior imaging device of a vehicle;
Fig. 7a is a front elevation view of yet another embodiment of a housing, with Fig. 7b being an exploded view of an intake fan thereof; and
Fig. 8 is a front elevation view of a variant of the intake fan of Fig. 7b.

### DETAILED DESCRIPTION

Hereinafter, preferred embodiments of this disclosure will be described in detail with reference to the accompanying drawings. The embodiments presented here are provided for the purpose of clarity and description, and it would be apparent to those having ordinary skill in the art that the scope of this disclosure is not limited to those embodiments.

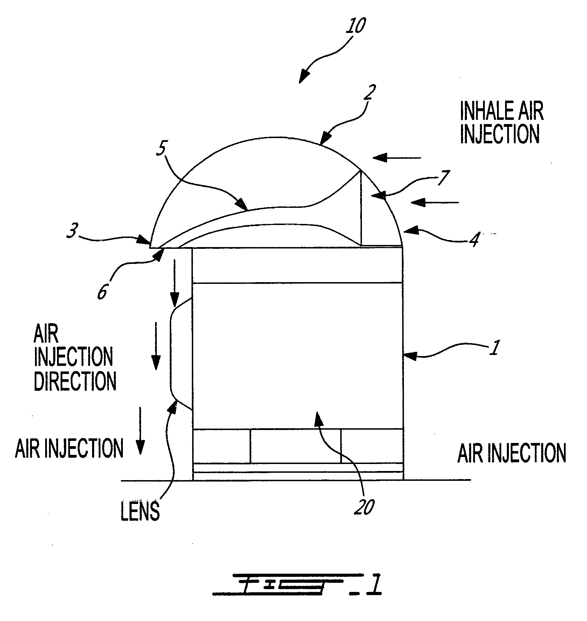

Fig. 1 is a side view showing a housing for an exterior imaging device of a vehicle according to an embodiment.

The housing 10 for an exterior imaging device of a vehicle according to this embodiment receives an imaging device 20 therein and is mounted to a roof of a vehicle in this embodiment. The housing 10 includes a housing body 1 which receives the imaging device 20 and is mounted to the roof of the vehicle, and a low-profile dome member 2 having an extension hood 3 which covers the upper portion of the housing body 1 and extends further to the housing body at a position above a lens of the imaging device 20. Preferably, the housing body 1 and the dome member 2 are formed integrally.

The imaging device 20 can include a video camera, a UV emitter/detector, and/or a laser emitter/detector to name a few examples. The signals sent from the video camera have drawbacks in that a distance of an object captured at the front of the camera may not be directly measured, in that its reliability depends on the state of light or weather such as night, fog, smog, rain, snow, direct light and direct headlight from a vehicle at the head or rear, and in that the exposure control may be delayed when a light state changes, which may be the case for instance when the vehicle enters a tunnel. The laser emitter/detector has a deteriorated resolving power in comparison to the video camera and has a drawback in that a color of an object such as lane markings, road markings and traffic lights is not recognized. However, when being mounted to an exterior of a vehicle, the laser emitter/detector may give a clear rear view and allow easy calculation of a distance from a vehicle at the rear by using the time of flight since it is substantially not influenced by direct light or headlight from the vehicle at the rear. Therefore, it should be clearly understood that the imaging device of this disclosure may be configured by suitably combining a video camera and a UV or laser emitter/detector in accordance to its purpose and be then received in the housing of this disclosure.

In addition, the lens of the imaging device 20 should be understood to possibly include a lens portion of the video camera and a light transmitter of the UV or laser emitter/detector. In a case where a front glass window is formed to protect the lens of the imaging device 20, it should be understood that the lens represents the front glass window at the front surface of the lens of the imaging device 20.

The extension hood 3 has an air injection hole 6 for injecting an air toward the lens of the imaging device and extends further to the housing body 1 to prevent the lens of the imaging device from exposing to the direct light. In addition, the extension hood 3 plays a role of protecting the lens of the imaging device against rain or snow.

The dome member 2 has an air inhaling hole 4 formed in parallel with an advancing direction of the vehicle to inhale an air, an air injection hole 6 formed in the extension hood 3 to inject an air downwards toward the lens, and an air supply path 5 playing a role of an air passage between the air inhaling hole 4 and the air injection hole 6.

A mesh filter 7 is preferably mounted in the air inhaling hole 4 to filter impurities such as dust included in the inhaling air.

When the vehicle is driving, the air is inhaled through the air inhaling hole 4 formed in parallel with the advancing direction of the vehicle and is supplied to the air injection hole 6 through the air supply path 5. Then, the air is injected downwards from the air injection hole 6 toward the lens of the imaging device 20 to prevent impurities such as dust, pollen, raindrops or the like from adhering to the lens of the imaging device 20 or the front glass window (not shown) formed at the front of the lens of the imaging device 20 for protecting the lens of the imaging device 20. In addition, if such impurities adhere to the lens of the imaging device 20, the injected air removes the impurities. Even in a case where the imaging device is mounted to the exterior of the vehicle where impurities easily adheres to the imaging device, it is possible to prevent impurities from adhering to the lens of the imaging device and to remove impurities adhered to the lens of the imaging device by using the air flow naturally generated due to the driving vehicle.

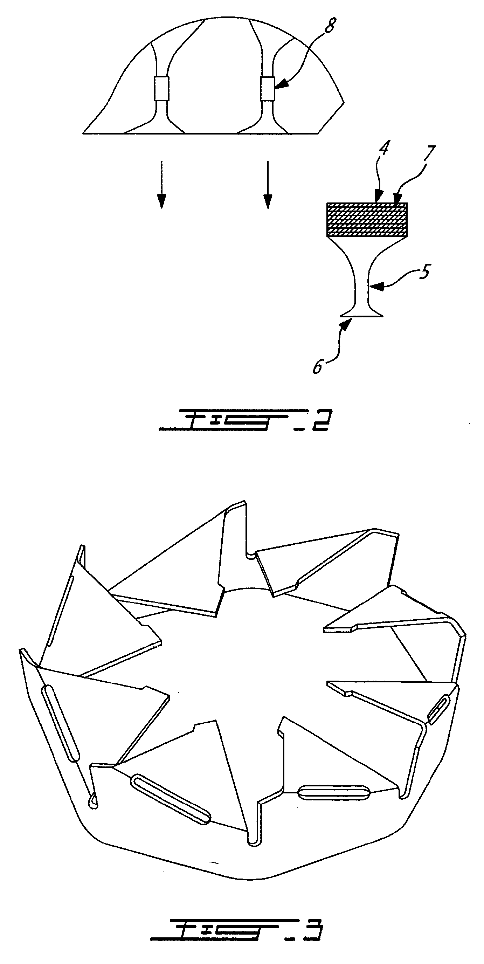

Referring to Fig. 2 showing sectional areas of the air inhaling hole 4, the air supply path 5 and the air injection hole 6, the sectional area of the air supply path 5 is smaller than the sectional area of the air inhaling hole 4. It accelerates the flow of the air injected through the air injection hole 6 to give a sufficient injection force for removing impurities adhering to the lens of the imaging device.

According to the invention, a fan 8 is installed in a predetermined region of the air supply path 5. In accordance with one embodiment, the fan can be self-propelled by the flow of air in the air supply path and simply be used to impart a tangential vortex movement in the flow of air. Alternately, the fan can be motor-driven to accelerate the air and increase the pressure to strengthen the jet of cleaning air exiting the air injection holes 6.

Fig 3 shows one example of a fan which can be installed to a part of the air supply path 5.

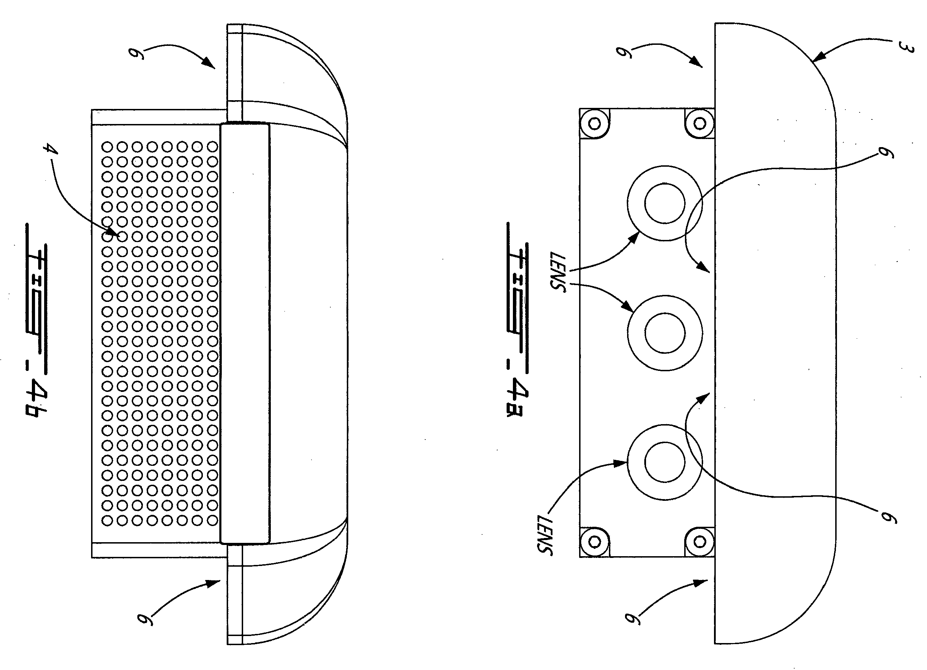

Figs. 4a and 4b show a housing for an exterior imaging device of a vehicle according to another embodiment of this disclosure.

Fig. 4a is a front view showing the housing for an exterior imaging device of a vehicle and Fig. 4b is a rear view showing the housing for an exterior imaging device of a vehicle.

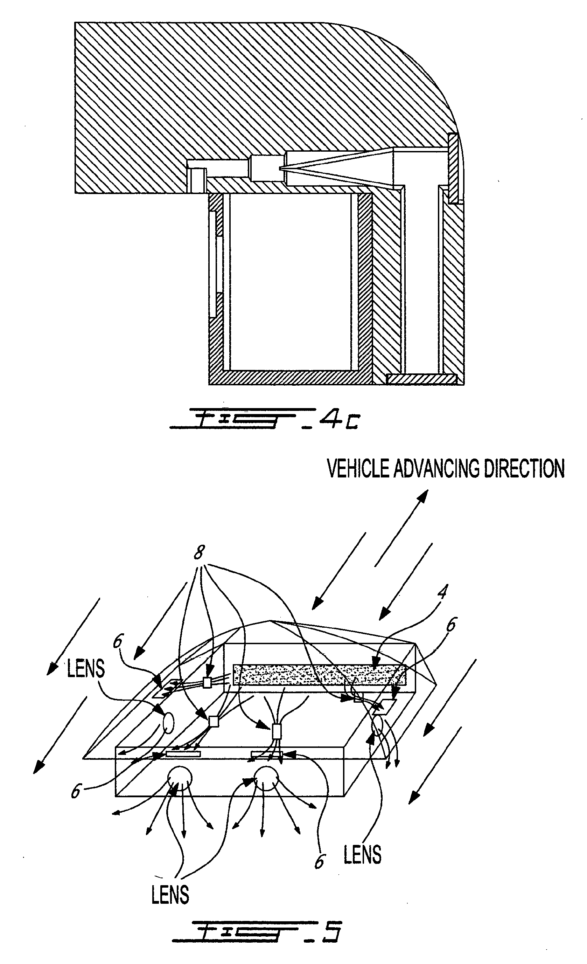

As shown in Figs. 4a and 4b, the housing for an exterior imaging device of a vehicle according to this embodiment has an extension hood 3 protruding laterally from the body of the housing 10 on three sides, namely right and left sides of the housing 10 and a side of the housing 10 opposite to the air inhaling hole 4 (rear side), and that the air inhaling hole 4 is installed in the housing body 1. The cross-sectional view shown in Fig. 4c shows an example of an air passage configuration for this embodiment which can be created by machining.

According to this embodiment, an imaging device for providing a rear view and an imaging device for providing views of right and left blind spots may be received in a single housing. However, the housing of this disclosure may be configured with three modules so that the image devices for providing views of right and left blind spots are installed at right and left edges of the vehicle to form a wider viewing angle.

In this embodiment, it could be understood that the air inhaling hole 4 has a grating which can have a fine lattice pattern to prevent impurities such as dust from being inhaled, and the fine lattice pattern of the grating can have the same function as a mesh filter as being easily understood by those having ordinary skill in the art.

Referring to Fig. 5 showing operations of the housing for an external imaging device of a vehicle, the air inhaled through the air inhaling hole 4 is accelerated by means of the air supply path 5 and by the fan 8 and is injected downwards toward the lens of the imaging device through the air injection holes 6 of the extension hoods 3 formed at three surfaces of the housing 10. By this configuration, a camera for a rear view can be installed at a side of the housing body opposite to the air inhaling hole, and cameras for blind spot views may be installed at right and left sides of the housing body.

Even though the camera for a rear view and the cameras for right and left blind spot views are received in one housing in this embodiment, it should be understood that the cameras for right and left blind spot views may be received in separate housings and installed at right and left sides of the vehicle in order to give wider blind spot views.

In addition, the air injection hole 6 may be separately formed at each lens of the imaging device as much as the entire lenses of the imaging device installed at one side so that the air may be injected to each lens of the imaging device.

According to this embodiment, the rear camera and the right and left cameras of the vehicle may be received in the housing 10 together, and accordingly the rear side and blind spots of the vehicle may be covered together. If the imaging device capable of covering the rear side and blind spots of the vehicle together is installed to the exterior of the vehicle, the function of a lane changing assistance which is recently adopted as a part of a vehicle driving safety system may be sufficiently realized. Images or laser images for both lateral blind spots of a vehicle and the rear area of about 50 m may be provided to an analyzing algorithm of the vehicle driving safety system through a canvas, and the analyzing algorithm may give effective information to a driver by using the same.

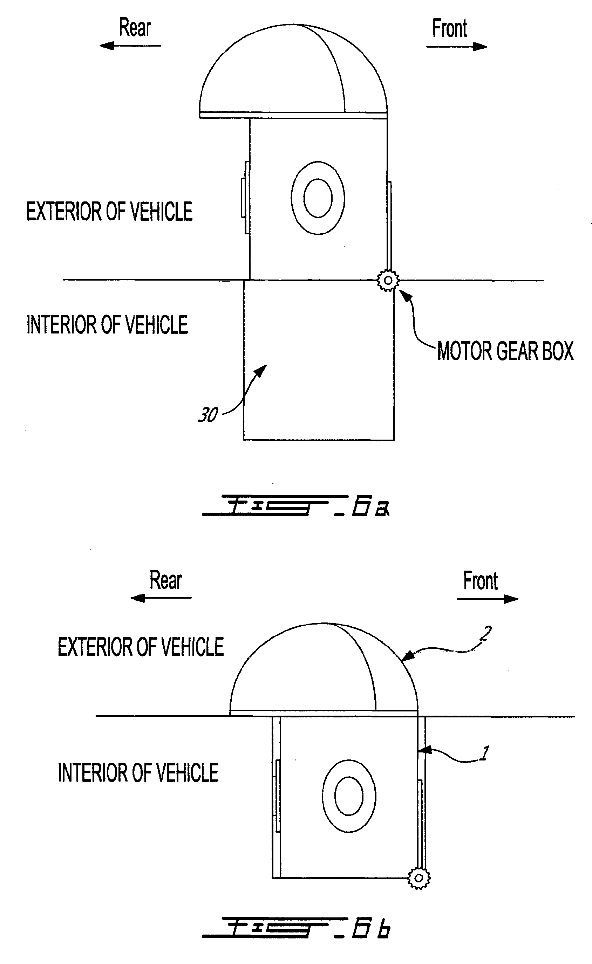

Figs. 6a and 6b show an installation state of the housing for an exterior imaging device of a vehicle according to this disclosure.

As shown in Figs. 6a and 6b, a housing receiving groove 30, in which the housing body 1 of the housing 10 for an exterior imaging device of a vehicle is tightly received, is formed in the roof of the vehicle. When the vehicle is driving, as shown in Fig. 6a, the housing body 1 protrudes from the housing receiving groove 30 by means of a motor (not shown) to operate the imaging device. At an ordinary time when the vehicle is not driving, as shown in Fig. 6b, the housing body 1 is received in the housing receiving groove 30. Therefore, even when the vehicle is not driving, in other words even when the housing of this disclosure does not inject an air due to the absence of an inhaled air, impurities do not adhere to the lens of the imaging device since the imaging device is received in the housing receiving groove 30. At this time, the dome member is flush-mounted to the roof of the vehicle, and more preferably, a rubber gasket is installed along the edge of the housing receiving groove or the edge of the dome member in order to prevent water or other impurities from permeating.

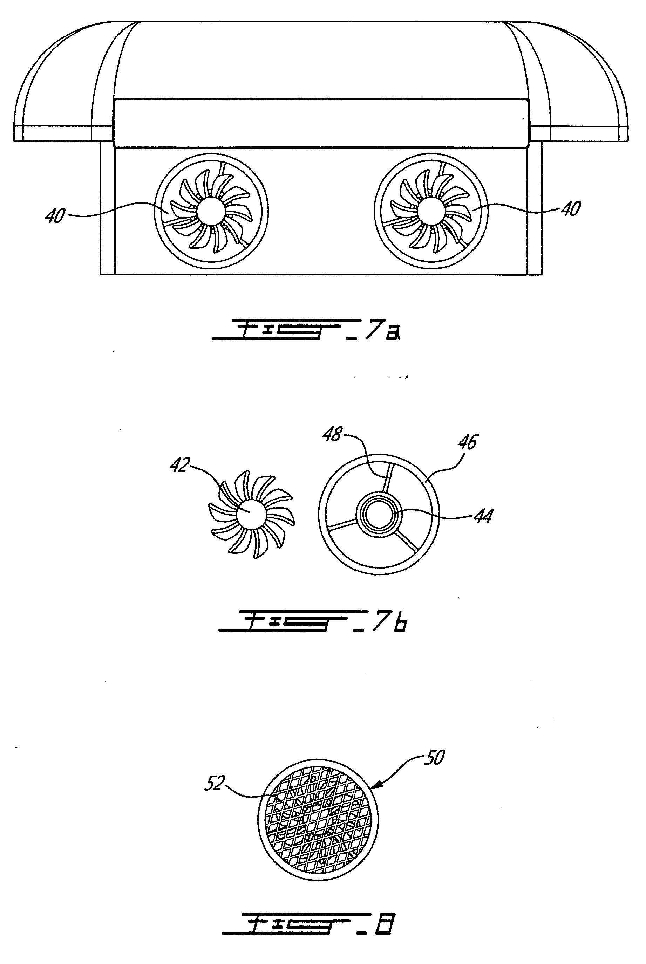

Fig. 7a shows another embodiment where fans 40 are used directly in the air intake holes. Fig. 7b shows an example construction of the fans 40 which can have a blade member 42 mounted to a bearing 44 held securely in a housing member 46 by stator vanes 48.

Fig. 8 shows an alternate embodiment of a fan 50 for use in the air intake hole where the inlet of the housing is covered by a wire mesh 52.

In any of the embodiments disclosed above, as well as others, it will be understood that the air intake can be covered with a grating, mesh or similar construction which can be heated to prevent formation of or allow removal of ice buildup. The heating can be done by exposing a conductive element to an electrical current, for instance.

While the exemplary embodiments have been shown and described, it will be understood by those skilled in the art that various changes or modifications in form and details may be made thereto without departing from the scope of this disclosure as defined by the appended claims. For instance, the shape of the front face can vary, the circumference or shape of the ventilation holes where incoming air flows in to the system can vary, including changing the configuration and position of the ventilation holes, the shape and configuration of the air path inside the housing can vary, heating elements or filaments can be added to any portion of the housing to allow preventing or removing ice formation, the characteristics of the holes where the air flows out can vary, the concentratin of the air flow can be changed, a solar energy collector (solar panel) can be added to the roof of the system, protective flaps can be added to protect the sides of the lens, the position and/or number of optical lenses on the housing can vary, and electrical coil can be added for powering the system. Therefore, it is intended that this disclosure should not be limited to the particular exemplary embodiments disclosed as the best mode contemplated for carrying out this disclosure, but that this disclosure will include all equivalents and embodiments falling within the scope of the appended claims.

## Claims

1. A housing (10) for an exterior imaging device (20) of a vehicle, which receives an imaging device therein and which is for mounting to an exterior of a vehicle, the housing comprising:
a housing body (1) which receives the imaging device and which is for mounting to the exterior of the vehicle; and
a dome member (2) having an extension hood (3) which covers an upper portion of the housing body and projects from the housing body above a lens of the imaging device,
wherein the housing comprises:
an air inhaling hole (4) formed in at least one of the housing body and the dome member, facing a forward direction of the vehicle to inhale an air;
an air injection hole (6) formed in the extension hood to inject the air downwards toward the lens of the imaging device;
an air supply path (5) extending between the air inhaling hole and the air injection hole, a sectional area of the air supply path being smaller than a sectional area of the air inhaling hole, and
an air accelerating fan (8, 40, 50) is installed to a part of the air supply path.

2. The housing for an exterior imaging device of a vehicle according to claim 1, wherein the extension hood is formed at right and left sides of the housing body and a side of the housing body opposite to the air inhaling hole.

3. The housing for an exterior imaging device of a vehicle according to claim 1, wherein a mesh (7) or grating is installed in the air inhaling hole.

4. The housing for an exterior imaging device of a vehicle according to claim 1 wherein the fan is positioned in the air inhaling hole.

5. The housing for an exterior imaging device of a vehicle according to claim 1, wherein the fan is arranged to be self-propelled by flow of air in the air supply path.

6. A vehicle comprising a housing for an exterior imaging device, according to any preceding claim, mounted on an exterior thereof.

7. The vehicle according to claim 6, wherein the vehicle has a housing receiving groove (30) formed therein, in which the housing body is tightly received, so that the housing body is received in the housing receiving groove, and the housing body protrudes from the housing receiving groove when the imaging device is operating.

8. The vehicle according to claim 7, wherein a waterproof rubber gasket is installed at an edge of the housing receiving groove.

9. The vehicle according to claim 7, wherein the housing body is operable by a motor to protrude out from or recess back into the housing receiving groove.

10. The housing for an exterior imaging device of a vehicle according to claim 1, wherein the housing is mounted to an exterior of a vehicle.

## Patentansprüche

1. Gehäuse (10) für eine Außenabbildungsvorrichtung (20) eines Fahrzeugs, wobei das Gehäuse eine Abbildungsvorrichtung aufnimmt und für eine Befestigung an einer Außenseite eines Fahrzeugs ausgebildet ist, wobei das Gehäuse Folgendes umfasst:
einen Gehäusekörper (1), der die Abbildungsvorrichtung aufnimmt und für eine Befestigung an der Außenseite des Fahrzeugs ausgebildet ist; und
ein Domelement (2) mit einer Verlängerungshaube (3), die einen oberen Abschnitt des Gehäusekörpers abdeckt und oberhalb einer Linse der Abbildungsvorrichtung aus dem Gehäusekörper herausragt,
wobei das Gehäuse Folgendes umfasst:
ein Luftaufnahmeloch (4), das mindestens im Gehäusekörper oder im Domelement ausgebildet und einer Vorwärtsrichtung des Fahrzeugs zugewandt ist, um so Luft aufzunehmen;
ein Lufteinblasloch (6), das in der Verlängerungshaube ausgebildet ist, um die Luft nach unten hin zur Linse der Abbildungsvorrichtung einzublasen;
ein Luftzuführungsweg (5), der sich zwischen dem Luftaufnahmeloch und dem Lufteinblasloch erstreckt, wobei eine Querschnittsfläche des Luftzuführungswegs kleiner als eine Querschnittsfläche des Luftaufnahmelochs ist, und
einen Luft beschleunigend Lüfter (8, 40, 50), der an einem Teil des Luftzuführungswegs installiert ist.

2. Gehäuse für eine Außenabbildungsvorrichtung eines Fahrzeugs nach Anspruch 1, bei dem die Verlängerungshaube an der rechten und der linken Seite des Gehäusekörpers sowie an einer Seite des Gehäusekörpers ausgebildet ist, die dem Luftaufnahmeloch gegenüberliegt.

3. Gehäuse für eine Außenabbildungsvorrichtung eines Fahrzeugs nach Anspruch 1, bei dem ein Geflecht (7) oder Gitter im Luftaufnahmeloch installiert ist.

4. Gehäuse für eine Außenabbildungsvorrichtung eines Fahrzeugs nach Anspruch 1, bei dem der Lüfter im Luftaufnahmeloch positioniert ist.

5. Gehäuse für eine Außenabbildungsvorrichtung eines Fahrzeugs nach Anspruch 1, bei dem der Lüfter so angeordnet ist, dass er allein durch den Luftstrom im Luftzuführungsweg angetrieben wird.

6. Fahrzeug, das ein Gehäuse für eine Außenabbildungsvorrichtung nach einem der vorstehend aufgeführten Ansprüche umfasst, wobei das Gehäuse an einer Fahrzeugaußenseite befestigt ist.

7. Fahrzeug nach Anspruch 6, wobei das Fahrzeug eine darin ausgebildete Gehäuseaufnahmenut (30) hat, in der der Gehäusekörper fest aufgenommen wird, so dass der Gehäusekörper in der Gehäuseaufnahmenut aufgenommen wird und der Gehäusekörper während des Betriebs der Abbildungsvorrichtung aus der Gehäuseaufnahmenut herausragt.

8. Fahrzeug nach Anspruch 7, bei dem eine wasserdichte Gummidichtung an einer Kante der Gehäuseaufnahmenut installiert ist.

9. Fahrzeug nach Anspruch 7, bei dem der Gehäusekörper von einem Motor betätigt werden kann, um aus der Gehäuseaufnahmenut ausgefahren oder zurück in diese Nut eingefahren zu werden.

10. Gehäuse für eine Außenabbildungsvorrichtung eines Fahrzeugs nach Anspruch 1, wobei das Gehäuse an einer Außenseite eines Fahrzeugs befestigt ist.

## Revendications

1. Boîtier (10) pour un dispositif d'imagerie extérieur (20) d'un véhicule, lequel reçoit un dispositif d'imagerie dans celui-ci et lequel est destiné à être monté sur un extérieur d'un véhicule, le boîtier comprenant :
un corps de boîtier (1) qui reçoit le dispositif d'imagerie et qui est destiné à être monté sur l'extérieur du véhicule ; et
un élément formant dôme (2) ayant un capuchon de prolongement (3) qui recouvre une portion supérieure du corps de boîtier et fait saillie à partir du corps de boîtier au-dessus d'un objectif du dispositif d'imagerie,
le boîtier comprenant :
un trou d'aspiration d'air (4) formé sur le corps de boîtier et/ou l'élément formant dôme, orienté dans une direction vers l'avant du véhicule pour aspirer de l'air ;
un trou d'injection d'air (6) formé dans le capuchon de prolongement pour injecter l'air vers le bas en direction de l'objectif du dispositif d'imagerie ;
une voie d'alimentation en air (5) s'étendant entre le trou d'aspiration d'air et le trou d'injection d'air, une aire en section transversale de la voie d'alimentation en air étant inférieure à une aire en section transversale du trou d'aspiration d'air, et
un ventilateur d'accélération d'air(8, 40, 50) étant installé dans une partie de la voie d'alimentation en air.

2. Boîtier pour un dispositif d'imagerie extérieur d'un véhicule selon la revendication 1, dans lequel le capuchon de prolongement est formé sur les côtés gauche et droit du corps de boîtier et sur un côté du corps de boîtier opposé au trou d'aspiration d'air.

3. Boîtier pour un dispositif d'imagerie extérieur d'un véhicule selon la revendication 1, dans lequel un treillis (7) ou grillage est installé dans le trou d'aspiration d'air.

4. Boîtier pour un dispositif d'imagerie extérieur d'un véhicule selon la revendication 1, dans lequel le ventilateur est positionné dans le trou d'aspiration d'air.

5. Boîtier pour un dispositif d'imagerie extérieur d'un véhicule selon la revendication 1, dans lequel le ventilateur est agencé pour être automoteur sous l'effet du flux d'air dans la voie d'alimentation en air.

6. Véhicule comprenant un boîtier pour un dispositif d'imagerie extérieur, selon l'une quelconque des revendications précédentes, monté sur un extérieur de celui-ci.

7. Véhicule selon la revendication 6, dans lequel le véhicule a une rainure de réception de boîtier (30) formée dans celui-ci, dans laquelle le corps de boîtier est reçu de manière serrée, de telle sorte que le corps de boîtier est reçu dans la rainure de réception de boîtier et que le corps de boîtier fait saillie à partir de la rainure de réception de boîtier lorsque le dispositif d'imagerie fonctionne.

8. Véhicule selon la revendication 7, dans lequel un joint en caoutchouc étanche à l'eau est installé au niveau d'un bord de la rainure de réception de boîtier.

9. Véhicule selon la revendication 7, dans lequel le corps de boîtier peut être actionné par un moteur pour faire saillie hors de la rainure de réception de boîtier ou pour rentrer à nouveau dans cette dernière.

10. Boîtier pour un dispositif d'imagerie extérieur d'un véhicule selon la revendication 1, dans lequel le boîtier est monté sur un extérieur d'un véhicule.
